# EUROPÄISCHE PATENTSCHRIFT

(11) **EP 3 469 511 B1**
(45) Veröffentlichungstag und Bekanntmachung des Hinweises auf die Patenterteilung: **09.12.2020**
(21) Anmeldenummer: 17729009.5
(22) Anmeldetag: 31.05.2017
(51) Int. Cl.: G06F 21/62, G06F 21/79

(54) **SPEICHERVERWALTUNG EINES SICHERHEITSMODULS**
MEMORY MANAGEMENT OF A SECURITY MODULE
GESTION DE MÉMOIRE D'UN MODULE DE SÉCURITÉ

(30) Priorität: 10.06.2016 DE 102016007139
(43) Veröffentlichungstag der Anmeldung: 17.04.2019
(73) Patentinhaber: Giesecke+Devrient Mobile Security GmbH, 81677 München (DE)
(72) Erfinder: BALDISCHWEILER, Michael, 81825 München (DE)
(86) Internationale Anmeldenummer: PCT/EP2017/000636
(87) Internationale Veröffentlichungsnummer: WO 2017/211443

(56) Entgegenhaltungen:
- EP-A1- 1 770 534
- WO-A1-2016/014919

## Beschreibung

Die vorliegende Erfindung betrifft ein Sicherheitsmodul mit einer sicheren Speicherverwaltung, welche es ermöglicht, dass so genannte Roll-Backs bzw. bestimmte Angriffe auf gesicherte Speicherbereiche, nicht möglich sind. Die vorliegende Erfindung betrifft ebenso ein darauf gerichtetes Verfahren zum Betreiben des Sicherheitsmoduls und insbesondere zur Bereitstellung einer gesicherten Speicherverwaltung. Ferner ist die Erfindung gerichtet auf ein entsprechendes Computerprogrammprodukt mit Steuerbefehlen zur Ausführung des vorgeschlagenen Verfahrens bzw. zum Betreiben des vorgeschlagenen Sicherheitsmoduls.

Gemäß bekannter Verfahren werden Sicherheitsmodule in Form von Chipkarten mit Hardware-Einrichtungen, wie z.B. einer Prozessoreinheit, auch Smartcard, Mikroprozessor-Chipkarte oder Prozessorkarte genannt, in vielen sicherheitskritischen Bereichen eingesetzt. Hierzu sind Anwendungsszenarien wie z.B. der Einsatz von Chipkarten als Ausweisdokumente, zum Nachweis der Zugangsberechtigung eines Teilnehmers beispielsweise zu einem Mobilfunknetz oder zur Durchführung von Zahlungsverkehrstransaktionen bekannt. Der Einsatz von Chipkarten erfolgt dabei häufig in Zusammenwirken mit einem für die jeweilige Anwendung vorgesehene Terminaleinrichtung mit einer Leseeinheit, die dazu eingerichtet ist, nach einer vorhergehenden Authentisierung sicherheitskritische Daten aus einer solchen Chipkarte auszulesen. Insbesondere sind hierbei Chipkarten bekannt, welche austauschbar in ein Mobiltelefon eingebracht werden oder in diese fest integriert sind.

EP 1 770 534 A1 offenbart eine Vorrichtung und ein Verfahren, die den Zugriff auf einen Speicher steuern, wobei jeder von mehreren Anwendungen nur auf einen der Anwendung zugewiesenen Speicherbereich zugreifen darf. WO 2016/014919 A1 offenbart ein Verfahren und eine Vorrichtung, die einen Rollback-Angriff unter Verwendung einer Sequenznummer oder eines Zeitstempels erfassen, die von einer externen Vorrichtung abgerufen werden.

Bei einer Durchführung von sicherheitskritischen Anwendungen durch ein Sicherheitsmodul, beispielsweise eine Chipkarte oder eine eUICC, ist ein Schutz des Sicherheitsmoduls und der darin hinterlegten sicherheitskritischen Daten vor Angriffen und unberechtigten Manipulationen notwendig. Hierzu sind Angriffstechniken bekannt mitsamt entsprechenden Abwehrmaßnahmen.

Ein Angriffsszenario auf eine SIM-Karte eines Mobiltelefons, sei es eine austauschbare SIM-Karte oder eine fest integrierte SIM-Karte, also ein UICC oder eben ein eUICC, ist das Auslesen von Speicherinformationen aus dem entsprechenden Datenspeicher und ggf. nach mehreren Schreiboperationen auf dem Datenspeicher die ausgelesenen Daten wieder einzuspielen. Beispielsweise kann in einem ersten Schritt ein Guthaben auf die UICC geladen werden und in einem zweiten Schritt wird eine so genannte MMU umgestellt und ein Backup von dem Speicher erstellt. In einem darauf folgenden dritten Verfahrensschritt kann von dem Guthaben ein Wert abgezogen werden, worauf in einem manipulativen Schritt nun das Backup wieder zurückgespielt wird. Somit sind die Abbuchungsoperationen des Guthabens wieder rückgängig gemacht und es erfolgte somit eine Manipulation des Kartenguthabens.

Es ist somit eine Aufgabe der vorliegenden Erfindung ein Sicherheitsmodul bzw. ein Verfahren zum Betreiben eines Sicherheitsmoduls bereitzustellen, welches es erlaubt, Datenmanipulationen nicht zuzulassen oder wenigstens Datenmanipulationen zu erkennen. Diese Lösung soll möglichst unter Verwendung bestehender Hardwaresysteme mit minimalem technischen Aufwand implementiert werden. Es ist ferner eine Aufgabe der vorliegenden Erfindung ein entsprechendes Computerprogrammprodukt mit Anweisungen zur Ausführung des Verfahrens bereitzustellen.

Die Aufgabe wird gelöst mittels eines Sicherheitsmoduls, welches die Merkmale des Patentanspruch 1 verwirklicht. Weitere vorteilhafte Ausgestaltungen des Sicherheitsmoduls sind in den abhängigen Ansprüchen angegeben. Demgemäß wird ein Sicherheitsmodul mit einer sicheren Speicherverwaltung vorgeschlagen. Das Sicherheitsmodul umfasst einen Datenspeicher und mindestens zwei Schreibeinheiten, welche jeweils eingerichtet sind zum Veranlassen von Schreiboperationen auf dem Datenspeicher. Ferner ist eine Erkennungseinheit vorgesehen, welche eingerichtet ist zum Erkennen der Schreibeinheit, welche die Schreiboperation veranlasst. Das Sicherheitsmodul hält mindestens einen Sensor vor, der ein Erkennen der Schreibeinheit physikalisch mittels einer Messung ermöglicht. Ferner umfasst das Sicherheitsmodul eine Manipulationsbehandlungseinheit, welche eingerichtet ist zum Auslösen einer bereitgestellten Sicherheitsoperation, falls das Veranlassen der Schreiboperation einer nicht berechtigten Schreibeinheit zuzuordnen ist.

Der Durchschnittsfachmann kennt diverse Anwendungsszenarien, wie die Speicherverwaltung konkret implementiert ist. So ist es beispielsweise möglich, dass das Sicherheitsmodul selbst über einen Datenspeicher verfügt oder aber auch, dass sich das Sicherheitsmodul den Datenspeicher mit weiteren Komponenten teilt. Beispielsweise könnte das Sicherheitsmodul als ein eUICC vorliegen, welches sich einen Datenspeicher, beispielsweise einen RAM-Speicher mit einem Baseband-Controller BB teilt.

Während also in einem Sicherheitsmodul Datenspeicher angeordnet sind, so verfügt das Sicherheitsmodul über weitere Komponenten, welche sich gegebenenfalls den Datenspeicher untereinander aufteilen. Diese Komponenten können beispielsweise als Schreibeinheiten bezeichnet werden, welche jeweils Zugriff auf den Datenspeicher haben. Hierbei ist sicherzustellen, dass die Schreibeinheiten unter einander nur diejenigen Speichersegmente auslesen bzw. beschreiben können, welche auch diesen zugeordnet sind. Somit ist es zu verhindern, dass beispielsweise durch eine Lücke in einem Betriebssystem eine erste Schreibeinheit lesenden und/oder schreibenden Zugriff auf Speichersegmente einer anderen Schreibeinheit erhält. Gelingt dies aufgrund eines Angriffs oder einer Sicherheitslücke nicht, so ist zumindest zu verhindern, dass nach einer lesenden Operation eine schreibende Operation auf den Datenspeicher erfolgen kann. Dies hat dann zur Folge, dass ein Zurückschreiben von ausgelesenen Daten, ein so genanntes Roll-Back, nicht möglich ist. Besonders vorteilhaft ist es, ein solches Rückschreiben zu verhindern, oder aber zumindest, falls dies technisch einfacher zu realisieren ist, ein Zurückschreiben von Daten zu erkennen.

Dies erfolgt erfindungsgemäß dadurch, dass eine Erkennungseinheit vorgesehen ist, welche eingerichtet ist, die Schreibeoperationen auf dem Datenspeicher zu analysieren und zu erkennen, welche der Schreibeinheiten auf den Datenspeicher zugreift. Dies kann derart erfolgen, dass beispielsweise die Erkennungseinheit eingerichtet ist, Datenströme auf dem Datenspeicher bzw. zu den Datenspeichern zu erkennen, diese zurück zu verfolgen und somit eine Schreibeinheit zu identifizieren.

Dem Durchschnittsfachmann sind hierbei weitere Möglichkeiten bekannt, wie ein Erkennen einer Schreibeinheit erfolgen kann. Insbesondere können hierbei weitere Komponenten beteiligt sein, welche einen Rückschluss auf eine Schreibeinheit zulassen. Eine Schreibeinheit ist dahingehend zu verstehen, dass diese nicht zwingendermaßen den physischen Schreibvorgang durchführen muss, einen solchen Schreibvorgang aber zumindest anstößt bzw. veranlasst. Somit kann eine Speichereinheit als jegliche Einheit verstanden werden, welche lesenden und/oder schreibenden Zugriff auf einen Datenspeicher anfragt. Als eine Schreiboperation wird insbesondere auch eine Löschoperation angesehen, da diese bestimmte Daten überschreibt. Somit es erfindungsgemäß besonders vorteilhaft, dass auch ein nicht berechtigtes Löschen von Daten auf dem Sicherheitsmodul erkannt bzw. verhindert wird.

Wird nunmehr erkannt, dass eine Schreibeinheit, welche zum Lesen bzw. zum Schreiben auf einem Datenträger nicht berechtigt ist, so reagiert die Manipulationsbehandlungseinheit entsprechend. Hierzu ist es erfindungsgemäß möglich, dass die Manipulationsbehandlungseinheit eine Schreiboperation erkennt, welche nicht genehmigt ist, und diese vorab verhindert. Ferner ist es jedoch auch möglich, dass erst nach einem Ausführen der Schreibeoperation erkannt wird, dass die Schreiboperation nicht genehmigt ist. Somit kann derart reagiert werden, dass die Schreiboperation rückgängig gemacht wird, beispielsweise in dem die Daten vor der Schreiboperation wieder nach einem Ausführen der Schreiboperation in den Datenspeicher eingespielt werden. Es kann jedoch auch möglich sein, dass die nicht genehmigte Schreibinformation bereits durchgeführt ist und somit lediglich eine Information bereit zu stellen ist, welche anzeigt, dass eine Manipulation, also eine nicht genehmigte Schreiboperation, durchgeführt wurde. Die Manipulationsbehandlungseinheit kann beispielsweise über einen Datenspeicher verfügen, welcher Aufschluss darüber gibt, welche Schreibeinheiten für welche Speichersegmente zugelassen sind. Es ist jedoch erfindungsgemäß auch möglich, dass eine entsprechende Authentisierung der einzelnen Schreibeinheiten derart erfolgt, dass die Manipulationsbehandlungseinheit selbsttätig erkennen kann, ob die jeweilige Schreibeinheit Zugriff haben darf oder nicht. Hierzu sind dem Fachmann diverse Möglichkeiten bekannt, wie er eine Authentisierung bzw. eine Autorisierung veranlassen kann. Ferner verfügen die entsprechenden Einheiten auch über eine Entscheidungslogik, welche es ermöglicht auszuwählen, welche Sicherheitsoperationen auszuführen sind. Dies kann beispielsweise fest eingestellt sein, also hart verdrahtet, oder aber auch dynamisch aus einem weiteren Datenspeicher ausgelesen werden.

Das Sicherheitsmodul kann beispielsweise als eine Chipkarte, ein Embedded UICC (eUICC), Secure Element SE, oder als ein integriertes UICC (iUICC) vorliegen. Dem Fachmann sind hier jedoch auch weitere Hardwarekomponenten bekannt, welche ein solches Sicherheitsmodul formen können. Erfindungsgemäß kann eine Schreibeinheit als ein solches Sicherheitsmodul bzw. als ein Teil eines solchen Sicherheitsmoduls bezeichnet werden. Eine weitere Schreibeinheit kann beispielsweise ein so genannter Baseband-Controller bzw. ein Baseband-Prozessor sein. Solche Baseband-Prozessoren sind in Systeme eingebettet, wie beispielsweise Mobilfunktelefone, GPS oder Bluetooth-Geräte. Diese nehmen typischerweise Funktionen der Datenübertragung über eine Kommunikationsschnittstelle wahr. Eine solche Schreibeinheit kann beispielsweise ein herkömmlicher Baseband-Prozessor sein. Erfindungsgemäß finden auch Chipkartenbetriebssysteme Anwendung, welche auf einem solchen Sicherheitsmodul installiert sind. Diese stellen eine Software zur Sicherung der Speicherung von geheimen Daten auf Speichern bereit. Diese können beispielsweise nichtflüchtige Speicher, so genannte NVM-Speicher sein. Ferner finden Prepaid-Verfahren Anwendung auf einer Speicherkarte, welche sensible Daten schreibt bzw. ausliest.

Erfindungsgemäß ist es insbesondere vorteilhaft, dass eine so genannte Chargepump Anwendung findet. Diese ist für das Löschen/Schreiben des so genannten NVM-Speichers zuständig. Die Chargepump ist in der Lage entweder den gesamten NVM-Speicher oder einen einzelnen physikalischen Sektor (16Byte-64kByte, je nach Größe des NVM-Speichers) zu löschen. Dabei wird der Chargepump die Adresse, logisch bzw. physikalisch, mitgeteilt. Über eine so genannte Memory Management Unit MMU, wird dann die jeweilige Seite, bzw. Page, selektiert und dann beschrieben bzw. gelöscht. Die Adressselektion kann entweder physikalisch oder logisch erfolgen, je nach Hersteller mag dies unterschiedlich zu implementieren sein.

Im Zuge der immer weiteren Migration von Systemen wird die Chipkarte (UICC) bzw. das Sicherheitselement SE immer mehr ein Bestandteil von anderen Systemen. So kann beispielsweise ein Baseband-Controller noch als Master für eine UICC bzw. eUICC dienen. Die Ansteuerung der UICC bzw. eUICC erfolgt über die klassischen ISO 7816 Protokolle, wobei die entsprechenden Datenübertragungsprotokolle Byte orientierte Protokolle T=0 bzw. blockorientierte Protokolle T=1 definieren können. Insbesondere ist es vorteilhaft, dass mindestens ein Standard aus der ISO 7816 Familie bzgl. des erfindungsgemäßen Verfahrens bzw. des erfindungsgemäßen Sicherheitsmoduls Anwendung findet.

Die Daten werden auf der UICC bzw. eUICC in einem eigenen Speicherbereich abgelegt, der von außen nicht angesprochen werden kann. Die Daten liegen auf dem NVM verschlüsselt. Die Adress-/Datenverschlüsselung erfolgt in einer eigenständigen Komponente vom UICC bzw. eUICC Controller. Für jeden Controller ist ein eigener Schlüssel vorgesehen. Somit können die Daten zwischen den einzelnen UICC bzw. eUICC nicht ausgetauscht werden, auch wenn es physikalisch möglich wäre. Da jedoch die UICC nur ein Bestandteil eines anderen Controllers, z.B. eines Baseband-Controllers ist, teilt sie sich mit dem Baseband-Controller den RAM-Speicher, also auch den NVM-Speicher. Die physikalische Trennung der Speicher erfolgt über eine MMU. Die MMU kann über verschiedene Mechanismen gesteuert werden, um sicherzustellen, dass der Baseband-Controller keinen Zugriff auf den Speicher von der iUICC bekommt. Um sicherzustellen, dass die Daten von den Speichern der iUICC nicht verwendet werden können, werden auch diese mit Hilfe der Adress-/Datenverschlüsselung gegen Angriffe, wie z.B. einem Abfischen geschützt. Selbst wenn der Angreifer die Daten aus den Speichern auslesen kann, kann er mit diesen typischerweise nichts anfangen. Wenn es dem Angreifer allerdings über irgendwelche Schwächen, beispielsweise des Betriebssystems der Hardware oder dergleichen möglich ist, auf die Daten zugreifen zu können, muss mindestens sichergestellt werden, dass es nicht möglich ist, die Daten wieder über diesen Kanal in den Datenspeicher einspielen zu können. Erfindungsgemäß kann hierbei der Angriff über ein Einspielen eines Backups in den Speicher verhindert werden.

Da der NVM-Speicher über eine Chargepump verfügt, und diese für das Löschen bzw. Schreiben des NVM zuständig ist, hat man die Möglichkeit eine Änderung des Speichers physikalisch zu erkennen. Wird nun eine NVM-Änderung nicht über die iUICC vorgenommen, wird beim Löschen/Schreiben eine zusätzliche Information gesetzt. Dies kann z.B. das Löschen des Schlüssels für die Adress-/Datenverschlüsselung bedeuten oder es werden bestimmte Flags im NVM gesetzt, die der iUICC aufzeigen, dass eine NVM-Manipulation von außen vorgenommen wurde. Die iUICC hat nun die Möglichkeit aufgrund entsprechender Logiken zu entscheiden, ob diese NVM-Änderung zulässig war oder nicht. Somit besteht erfindungsgemäß die Möglichkeit gezielte Roll-Backs vom NVM-Speicher im Bereich der iUICC zu verhindern.

Bei dem Speicher kann es sich beispielsweise um einen so genannten EEPROM-Speicher handeln, der mehrere Seiten aufweist. Die Chargepump in der UICC hat die Möglichkeit ein zusätzliches Flag in der EEPROM-Page bzw. FLASH-Page zu setzen. Dieses Flag wird immer dann gelöscht, wenn ein Löschvorgang auf diese Page erfolgt, unabhängig davon, ob von außen oder über die Chargepump der UICC. Somit kann sichergestellt werden, dass die Bereiche, die über dieses Flag verfügen auch wirklich von der UICC beschrieben worden sind. Ein Beschreiben von anderen Informationen von außen, welches über das geteilte bzw. gesharte FLASH/EEPROM mit Hilfe der MMU möglich ist, wird somit unterbunden. Somit erfolgt ein Setzen eines zusätzlichen Flags, falls nicht mittels der Chargepump als eine mögliche Schreibeinheit geschrieben wurde.

So ist es ferner möglich, dass die Memory-Management Unit nur als ein Mittel zum Zweck der Speicherteilung vorliegt. Die MMU selbst hat typischerweise keine Möglichkeit diese Bereiche zu unterscheiden. Somit ist es erfindungsgemäß möglich, sicherzustellen, dass sicherheitsrelevante Daten nur von der UICC, also einer bestimmten Schreibeinheit, geschrieben werden können. Dabei spielt es typischerweise keine Rolle, dass die Daten selbst verschlüsselt im FLASH vorliegen, auch wenn die Verschlüsselung im Chip individuell stattfindet. Bei einer so genannten Chargepump kann es sich beispielsweise um eine Ladungspumpe handeln, wie diese dem Fachmann bereits bekannt ist. Somit ist es erfindungsgemäß möglich, bestehende Hardware-Komponenten wieder zu verwenden, bzw. lediglich minimal anzupassen, um dennoch zu einer sicheren Datenverwaltung zu gelangen.

Gemäß einem Aspekt der vorliegenden Erfindung liegt das Sicherheitsmodul als eine Chipkarte, ein Chipkartenmodul, eine SIM-Karte, ein M2M-Modul oder eine eUICC vor. Dies hat den Vorteil, dass das vorgeschlagene Sicherheitsmodul mit lediglich geringen Anpassungen in der Hardware in bestehende Systeme eingebettet werden kann. Insbesondere können bestehende Komponenten wieder verwendet werden.

Gemäß einem weiteren Aspekt der vorliegenden Erfindung ist der Datenspeicher mittels einer Memory-Management Unit, MMU verwaltbar. Dies hat den Vorteil, dass keine neuen Hardware Komponenten hinzugefügt werden müssen und wiederum bestehende Hardware weiterverwendet werden kann.

Gemäß einem weiteren Aspekt der vorliegenden Erfindung ist der Datenspeicher zumindest teilweise mittels Adress- und/oder Datenverschlüsselung gesichert. Dies hat den Vorteil, dass weitere Sicherheitsmerkmale in das vorgeschlagene System bzw. das vorgeschlagene Sicherheitsmodul eingebracht werden können. So ist es generell ein Vorteil der vorliegenden Erfindung, dass bekannte Sicherheitsmechanismen nahtlos weiterverwendet werden können. Dies wird insbesondere dadurch sichergestellt, dass die vorgeschlagenen Maßnahmen keinen bestehenden Sicherheitsmechanismen widersprechen.

Gemäß einem weiteren Aspekt der vorliegenden Erfindung hält das Sicherheitsmodul mindestens einen Sensor vor, der ein Erkennen einer Schreibeinheit physikalisch mittels mindestens einer Messung ermöglicht. Dies hat den Vorteil, dass beispielsweise innerhalb einer Chipkarte Ströme gemessen werden können, die einen Hinweis darauf geben, von welcher Komponente eine Schreiboperation angefragt bzw. ausgelöst wurde. Dies ermöglicht eine sehr sichere Diagnose eines Ursprungs einer Schreiboperation, die wenig fehleranfällig ist.

Gemäß einem weiteren Aspekt der vorliegenden Erfindung liegt die Sicherheitsoperation als mindestens eine Operation aus einer Gruppe vor, die Gruppe aufweisend:
Eine Schreiboperation eines Flags, eine Schreiboperation einer Sperrfunktion des Datenspeichers, eine Schreiboperation einer Manipulationsinformation, eine Löschoperation, ein Verwerfen des Schreibvorgangs und ein Rückgängigmachen des Schreibvorgangs. Dies hat den Vorteil, dass ein oder mehrere der vorgeschlagenen Sicherheitsoperationen ausgeführt werden können, sobald eine Manipulation des Datenspeichers erkannt wird. So kann beispielsweise eine Sicherheitsoperation ausgelöst werden, die ein vorbestimmtes Flag, also ein Bit, setzt, falls eine Manipulation entdeckt wurde. Somit ist abgespeichert, dass die abgelegten Daten nicht mehr vertrauenswürdig sind und weitere Komponenten können sich in weiteren Verfahrensschritten danach richten. So kann beispielsweise implementiert werden, dass weitere Komponenten nicht mehr auf diesen Speicherbereich zugreifen, bzw. dass der Speicherbereich bzgl. der Richtigkeit der abgespeicherten Daten überprüft wird. Falls dies möglich ist, so kann die Manipulation derart behoben werden, dass die richtigen Daten wieder über die manipulierten Daten geschrieben werden.

Typischerweise liegen jedoch keine Informationen vor, wie nunmehr die korrekten Daten lauten müssen, so dass ein Datenspeicher erfindungsgemäß so verbleiben kann wie er ist, jedoch von weiteren Komponenten nicht mehr angesteuert wird. Besonders vorteilhaft ist es, erfindungsgemäß jedoch die Manipulation bereits vorab zu erkennen, d.h. bevor die Schreiboperationen ausgeführt werden. Dann ist es auch möglich, die manipulativen Schreiboperationen gar nicht erst zuzulassen und lediglich derjenigen Schreibeinheit Zugriff zu gewähren, die über entsprechende Rechte verfügt. Somit erfolgt also erfindungsgemäß ein Verhindern einer Manipulation der Daten in einem gewissen Speicherbereich.

Gemäß einem weiteren Aspekt der vorliegenden Erfindung hält das Sicherheitsmodul eine Entscheidungslogik vor, welche beschreibt, welche Sicherheitsoperation auszulösen ist. Dies hat den Vorteil, dass beispielsweise eine möglichst einfache Logik bereitgestellt werden kann, derart, dass es lediglich eine Möglichkeit zur Auswahl einer Sicherheitsoperation gibt. Somit wird auf eine entsprechende Entscheidungslogik verzichtet, was jedoch vorteilhafterweise dahingehend erweitert werden kann, dass eine Mehrzahl an Auswahlmöglichkeiten vorgehalten wird, die es in jeder Situation bzw. in Abhängigkeit der erkannten Manipulation ermöglicht, entsprechend zu reagieren. So kann erfindungsgemäß eine Tabelle vorgehalten werden, die beschreibt, bezüglich welcher Manipulation welche Sicherheitsoption bzw. -operation auszuführen ist. Dies kann beispielsweise in Abhängigkeit einer erkannten Schreibeinheit geschehen, derart, dass bestimmte Komponenten, also Schreibeinheiten, als vertrauenswürdig eingestuft werden und weitere Komponenten, also Schreibeinheiten, als nicht vertrauenswürdig eingestuft werden. Somit ist es also möglich, Manipulationen von vertrauten Komponenten lediglich als Fehler zu erkennen, wohingegen Manipulationen von anderen Komponenten als bösartig erkannt werden können. Dementsprechend ist dann auch die Sicherheitsoperation zu selektieren.

Gemäß einem weiteren Aspekt der vorliegenden Erfindung, ist die Manipulationsbehandlungseinheit eingerichtet, die Sicherheitsoperationen vor oder nach einer Schreiboperation auszulösen. Dies hat den Vorteil, dass bösartige Schreiboperationen im Vorhinein vermieden werden können oder aber auch, dass Schreiboperationen im Nachhinein als bösartig gekennzeichnet werden können und ggf. rückgängig gemacht werden können.

Gemäß einem weiteren Aspekt der vorliegenden Erfindung erfolgt die Ansteuerung des Sicherheitsmoduls mittels eines Standards der ISO 7816-Familie. Dies hat den Vorteil, dass Interoperabilität des vorgeschlagenen Sicherheitsmoduls bzw. des vorgeschlagenen Verfahrens zum Betreiben des Sicherheitsmoduls mit anderen Systemen gewährleistet wird.

Gemäß einem weiteren Aspekt der vorliegenden Erfindung liegt der Datenspeicher als ein nichtflüchtiger Speicher vor. Dies hat den Vorteil, dass bestehende sicherheitskritische Daten persistent abgespeichert werden können. Die vorliegende Erfindung ist jedoch keinesfalls lediglich auf einen nichtflüchtigen Speicher beschränkt, sondern bezieht sich eben auch auf flüchtige Speicher.

Gemäß einem weiteren Aspekt der vorliegenden Erfindung liegt mindestens eine Schreibeinheit als eine eUICC vor. Ferner liegt mindestens eine Schreibeinheit als ein Baseband-Controller BB vor. Dies hat den Vorteil, dass sich Komponenten einer Smartcard einen Speicher mit weiteren Komponenten teilen können, und somit lediglich geringe Hardwareressourcen bereitgestellt werden müssen. Typischerweise erhält jede Komponente Zugriffsrechte auf einen Teil des bereitgestellten Datenspeichers, wodurch es auch in Ausnahmefällen zu sicherheitskritischen Überschreitungen eben dieser Rechte kommen kann. Erfindungsgemäß wird ein Verfahren bereitgestellt, welches ein solches Überschreiten von Speicherzugriffsrechten anzeigt, bzw. verhindert.

Gemäß einem weiteren Aspekt der vorliegenden Erfindung erfolgt das Erkennen der Schreibeinheit durch die Manipulationsbehandlungseinheit unter Verwendung einer Chargepump. Dies hat den Vorteil, dass die Chargepump, also die Ladungspumpe, ein geeignetes Mittel darstellt, um deutlich zu erkennen, welche Schreibeinheit eine gewisse Schreiboperation veranlasst hat.

Gemäß einem weiteren Aspekt der vorliegenden Erfindung ist der Datenspeicher innerhalb einer eUICC oder außerhalb einer eUICC angeordnet. Dies hat den Vorteil, dass das Speichermodul an sich als eine eUICC vorliegen kann, aber auch, dass eine eUICC als ein Teil einer anderen Komponente vorliegen kann. So kann eine solche Komponente, also eine eUICC, ein Bestandteil eines anderen Controllers sein, z.B. eines Baseband-Controllers.

Die Aufgabe wird ebenfalls gelöst durch ein Verfahren zur sicheren Speicherverwaltung, wobei das Verfahren die Schritte aufweist des physikalischen Ausmessens einer Schreiboperation auf einem Datenspeicher unter Verwendung einer Chargepump so wie des Auswählens einer bereitgestellten Sicherheitsoperation in Abhängigkeit des Auslesens basierend auf einer bereitgestellten Logik.

Die Aufgabe wird ferner gelöst durch ein Computerprogramm bzw. ein Computerprogrammprodukt aufweisend Steuerbefehle, die, falls sie auf einem Rechner zur Ausführung gebracht werden, das vorgeschlagene Verfahren implementieren bzw. ein Betreiben des vorgeschlagenen Sicherheitsmoduls veranlassen.

Hierbei ist es besonders vorteilhaft, dass das Verfahren zum Betreiben des Sicherheitsmoduls geeignet ist und das Sicherheitsmodul strukturelle Merkmale bereitstellt, die ein Ausführen des Verfahrens zur sicheren Speicherverwaltung ermöglichen. Somit lassen sich alle bzgl. des Sicherheitsmoduls aufgezeigten Merkmale auch auf das entsprechend vorgeschlagene Verfahren anwenden. Anders herum lassen sich alle Merkmale, die im Lichte des Verfahrens angeführt wurden, auch auf das Sicherheitsmodul anwenden. Gleiches gilt für die Ausgestaltung des Computerprogrammprodukts.

Im Folgenden werden vorteilhafte Ausgestaltungen mit Bezug auf die beigefügten Figuren beschrieben. Es zeigen:
- Figur 1:: Ein schematisches Blockschaltbild des Sicherheitsmoduls gemäß einem Aspekt der vorliegenden Erfindung; und
- Figur 2:: Eine schematische Darstellung eines Ablaufdiagramms eines Verfahrens zum Betreiben des vorgeschlagenen Sicherheitsmoduls gemäß einem Aspekt der vorliegenden Erfindung.

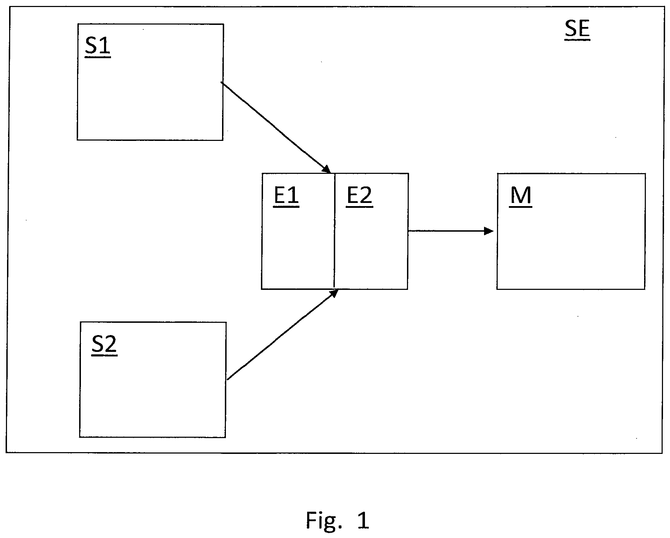

Die vorliegende Figur 1 zeigt ein Sicherheitsmodul SE, also ein Sicherheitselement, welches speicherkartentypische Komponenten aufweist. In der vorliegenden Figur 1 wurde sich auf die erfindungswesentlichen Merkmale beschränkt. Dies soll lediglich dem einfachen Verständnis beitragen und ist keinesfalls derart zu verstehen, dass in dem vorgeschlagenen Sicherheitsmodul SE keine weiteren Komponenten verbaut sind. Hierbei erkennt der Durchschnittsfachmann die typischen Komponenten, die in Chipkarten verbaut sind und integriert diese entsprechend.

Vorliegend sind zwei Schreibeinheiten S1, S2 eingezeichnet, welche auf einen Datenspeicher M zugreifen. Die beiden Schreibeinheiten S1, S2 müssen hierbei nicht direkt auf den Datenspeicher M zugreifen, sondern können lediglich eine Schreiboperation veranlassen. Diese beiden Schreibeeinheiten können beispielsweise ein iUICC sein bzw. ein Baseband-Controller. Da sich diese beiden Komponenten den gleichen Speicher M teilen, ist es möglich, dass aufgrund einer Ausnutzung einer Lücke in der Hardware bzw. im Betriebssystem der Chipkarte, eine Komponente auf einen Speicherbereich zugreift, für die diese keine Rechte hat. Deshalb sind die beiden Komponenten E1, E2 vorgesehen. Hierbei handelt es sich um die Erkennungseinheit E1 und die Manipulationsbehandlungseinheit E2. In der vorliegenden Figur 1 sind diese beiden Komponenten als eine einzige Komponente eingezeichnet. Dies stellt wiederum lediglich einen Aspekt der vorliegenden Erfindung dar, und soll nicht darüber hinwegtäuschen, dass diese beiden Einheiten auch getrennt vorliegen können. Beispielsweise kann eine dieser beiden Einheiten E1, E2 als eine Chargepump vorliegen. Beispielsweise kann die Chargepump mindestens einen Teil der Erkennungseinheit E1 bereitstellen, da in Abhängigkeit der Chargepump identifiziert werden kann, welche Schreibeinheit S1, S2 auf den Datenspeicher M zugreift.

Wird nunmehr eine Manipulation erkannt, so ist es möglich, dass der Zugriff einer der beiden Schreibeinheiten S1, S2 unterbunden wird bzw. die Schreiboperation im Nachhinein rückgängig gemacht wird.

Eine entsprechende Logik für Sicherheitsoperationen sowie Information zur Entscheidungsfindung können beispielsweise in dem Datenspeicher M abgelegt werden, wobei auch ein separater, weiterer Datenspeicher möglich ist. In einem der bereitgestellten Datenspeicher kann beispielsweise ein Flag bzw. ein Bit gesetzt werden, welches anzeigt, dass eine Manipulation stattgefunden hat. Es kann jedoch auch ein entsprechender Sperrvermerk hinterlegt werden, der den Zugriff auf die bereits manipulierten Daten durch weitere Komponenten ausschließt.

Generell beschreiben die Pfeile in der vorliegenden Figur 1 einen Fluss von Signalen bzw. Strömen innerhalb des Sicherheitsmoduls. Diese sind jedoch wiederum lediglich schematisch zu verstehen und erfolgen typischerweise auch in der entsprechenden Rückrichtung. Lediglich um die Schreiboperationen der Schreibeinheiten S1, S2 zu verdeutlichen, sind die vorliegenden Pfeile unidirektional ausgestaltet.

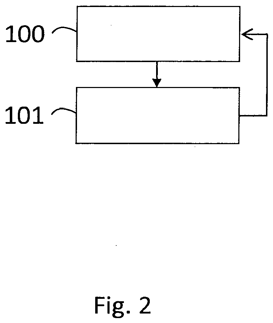

Figur 2 zeigt ein Verfahren zur sicheren Speicherverwaltung, beispielsweise in einem Sicherheitsmodul. Hierzu sind die Verfahrensschritte eines physikalischen Ausmessens 100 einer Schreiboperation auf einem Datenspeicher unter Verwendung einer Chargepump vorgesehen. Ferner erfolgt ein Auswählen 101 einer bereitgestellten Sicherheitsoperation in Abhängigkeit des Auslesens, basierend auf einer bereitgestellten Logik. Das bereitgestellte Verfahren kann beispielsweise anhand von Steuerbefehlen abgespeichert werden, die dem Sicherheitsmodul, wie es beispielsweise in Figur 1 gezeigt ist, über einen weiteren Speicher zugeführt werden. Hierbei kann es sich um den Speicher M handeln, wie er in Figur 1 gezeigt wurde. Es kann aber auch ein weiterer, separater Speicher vorgesehen werden.

Somit wurden ein Sicherheitsmodul sowie ein entsprechendes Verfahren zum Betreiben des Sicherheitsmoduls zur Realisierung einer sicheren Speicherverwaltung vorgeschlagen. Der erfindungsgemäße Gegenstand erlaubt es, Angriffe auf Datenspeicher bzw. unberechtigte Schreib- oder Löschoperationen auf einen Datenspeicher zu verhindern bzw. kenntlich zu machen. Insbesondere ist es erfindungsgemäß besonders vorteilhaft, dass so genannte Roll-Back-Angriffe vermieden werden können.

## Patentansprüche

1. Sicherheitsmodul (SE) mit sicherer Speicherverwaltung, aufweisend:
- einen Datenspeicher (M) und mindestens zwei Schreibeinheiten (S1, S2), welche jeweils eingerichtet sind zum Veranlassen von Schreiboperationen auf dem Datenspeicher (M);
- eine Erkennungseinheit (E1), eingerichtet zum Erkennen der Schreibeinheit (S1, S2), welche die Schreiboperation veranlasst; und
- eine Manipulationsbehandlungseinheit (E2), eingerichtet zum Auslösen einer bereitgestellten Sicherheitsoperation, falls das Veranlassen der Schreiboperation einer nichtberechtigten Schreibeinheit (S1, S2) zuzuordnen ist, wobei das Sicherheitsmodul (SE) mindestens einen Sensor vorhält, der ein Erkennen der Schreibeinheit (S1, S2) physikalisch mittels mindestens einer Messung ermöglicht.

2. Sicherheitsmodul (SE) nach Anspruch 1, **dadurch gekennzeichnet, dass** das Sicherheitsmodul (SE) als eine Chipkarte, ein Chipkartenmodul, eine SIM-Karte, ein M2M-Modul oder eine eUICC vorliegt.

3. Sicherheitsmodul (SE) nach Anspruch 1 oder 2, **dadurch gekennzeichnet, dass** der Datenspeicher (M) mittels einer Memory Management Unit, MMU, verwaltbar ist.

4. Sicherheitsmodul (SE) nach einem der vorhergehenden Ansprüche, **dadurch gekennzeichnet, dass** der Datenspeicher (M) zumindest teilweise mittels Adress- und/ oder Datenverschlüsselung gesichert ist.

5. Sicherheitsmodul (SE) nach einem der vorhergehenden Ansprüche, **dadurch gekennzeichnet, dass** die Sicherheitsoperation als mindestens eine Operation aus einer Gruppe vorliegt, die Gruppe aufweisend: eine Schreiboperation eines Flags, eine Schreiboperation einer Sperrfunktion des Datenspeichers (M), eine Schreiboperation einer Manipulationsinformation, eine Löschoperation, ein Verwerfen des Schreibvorgangs und ein Rückgängigmachen des Schreibvorgangs.

6. Sicherheitsmodul (SE) nach einem der vorhergehenden Ansprüche, **dadurch gekennzeichnet, dass** das Sicherheitsmodul (SE) eine Entscheidungslogik vorhält, welche beschreibt, welche Sicherheitsoperation auszulösen ist.

7. Sicherheitsmodul (SE) nach einem der vorhergehenden Ansprüche, **dadurch gekennzeichnet, dass** die Manipulationsbehandlungseinheit (E2) eingerichtet ist, die Sicherheitsoperation vor oder nach einer Schreiboperation auszulösen.

8. Sicherheitsmodul (SE) nach einem der vorhergehenden Ansprüche, **dadurch gekennzeichnet, dass** die Ansteuerung des Sicherheitsmoduls (SE) mittels eines Standards der ISO 7816-Familie erfolgt.

9. Sicherheitsmodul (SE) nach einem der vorhergehenden Ansprüche, **dadurch gekennzeichnet, dass** der Datenspeicher (M) als ein nichtflüchtiger Speicher vorliegt.

10. Sicherheitsmodul (SE) nach einem der vorhergehenden Ansprüche, **dadurch gekennzeichnet, dass** mindestens eine Schreibeinheit (S1, S2) als eine eUICC vorliegt und/oder mindestens eine Schreibeinheit (S1, S2) als ein Baseband-Controller, BB, vorliegt.

11. Sicherheitsmodul (SE) nach einem der vorhergehenden Ansprüche, **dadurch gekennzeichnet, dass** das Erkennen der Schreibeinheit (S1, S2) durch die Manipulationsbehandlungseinheit (E2) unter Verwendung einer Chargepump erfolgt.

12. Sicherheitsmodul (SE) nach einem der vorhergehenden Ansprüche, **dadurch gekennzeichnet, dass** der Datenspeicher (M) innerhalb einer eUICC oder ausserhalb einer eUICC angeordnet ist.

13. Verfahren zur sicheren Speicherverwaltung, aufweisend:
- physikalisches Ausmessen (100) einer Schreiboperation auf einem Datenspeicher (M) unter Verwendung einer Chargepump; und
- Auswählen (101) einer bereitgestellten Sicherheitsoperation in Abhängigkeit des Auslesens, basierend auf einer bereitgestellten Logik, falls die Schreiboperation einer nichtberechtigten Schreibeinheit (S1, S2) zuzuordnen ist.

14. Computerprogrammprodukt mit Steuerbefehlen zum Betreiben des Verfahrens nach Anspruch 13.

## Claims

1. A security module (SE) with secure memory management, having:
- a data memory (M) and at least two write units (S1, S2) that are each adapted to cause write operations on the data memory (M);
- a detection unit (E1) adapted to detect the write unit (S1, S2) that causes the write operation; and
- a manipulation handling unit (E2) adapted to trigger a security operation made available, if the causing of the write operation is to be associated with a non-authorized write unit (S1, S2), wherein the security module (SE) supplies at least one sensor that permits a detection of the write unit (S1, S2) physically by means of at least one measurement.

2. The security module (SE) according to claim 1, **characterized in that** the security module (SE) is present in the form of a chip card, a chip card module, a SIM card, an M2M module or an eUICC.

3. The security module (SE) according to claim 1 or 2, **characterized in that** the data memory (M) is manageable by means of a memory management unit, MMU.

4. The security module (SE) according to any of the preceding claims, **characterized in that** the data memory (M) is at least partially secured by means of address and/or data encryption.

5. The security module (SE) according to any of the preceding claims, **characterized in that** the security operation is present in the form of at least one operation from a group, the group having: a write operation of a flag, a write operation of a locking function of the data memory (M), a write operation of a manipulation information item, a delete operation, a rejection of the write operation and a reversal of the write operation.

6. The security module (SE) according to any of the preceding claims, **characterized in that** the security module (SE) supplies a decision logic that describes which security operation is to be triggered.

7. The security module (SE) according to any of the preceding claims, **characterized in that** the manipulation handling unit (E2) is adapted to trigger the security operation before or after a write operation.

8. The security module (SE) according to any of the preceding claims, **characterized in that** the activation of the security module (SE) takes place by means of a standard of the ISO 7816 family.

9. The security module (SE) according to any of the preceding claims, **characterized in that** the data memory (M) is present in the form of a non-volatile memory.

10. The security module (SE) according to any of the preceding claims, **characterized in that** at least one write unit (S1, S2) is present in the form of an eUICC and/or at least one write unit (S1, S2) is present in the form of a baseband controller, BB.

11. The security module (SE) according to any of the preceding claims, **characterized in that** the detection of the write unit (S1, S2) by the manipulation handling unit (E2) takes place employing a charge pump.

12. The security module (SE) according to any of the preceding claims, **characterized in that** the data memory (M) is arranged within an eUICC or outside an eUICC.

13. A method for secure memory management comprising:
- physical measuring (100) of a write operation on a data memory (M) employing a charge pump; and
- selecting (101) a security operation made available in dependence on the read-out, on the basis of a logic made available, if the write operation is to be associated with a non-authorized write unit (S1, S2).

14. A computer program product with control commands for operating the method according to claim 13.

## Revendications

1. Module de sécurité (SE) ayant une gestion sécurisée de mémoire, comportant :
- une mémoire de données (M) et au moins deux unités d'écriture (S1, S2) respectivement conçues pour déclencher des opérations d'écriture sur la mémoire de données (M) ;
- une unité de reconnaissance (E1) conçue pour reconnaître l'unité d'écriture (S1, S2) qui déclenche l'opération d'écriture; et
- une unité de traitement de manipulation (E2) conçue pour engendrer une opération de sécurité mise à disposition, dans le cas où le déclenchement de l'opération d'écriture est à affecter à une unité d'écriture (S1, S2) non autorisée, cependant que le module de sécurité (SE) tient à disposition au moins un capteur qui permet physiquement une reconnaissance de l'unité d'écriture (S1, S2), au moyen d'au moins une mesure.

2. Module de sécurité (SE) selon la revendication 1, **caractérisé en ce que** le module de sécurité (SE) se trouve sous forme d'une carte à puce, d'un module de carte à puce, d'une carte SIM, d'un module M2M ou d'une eUICC.

3. Module de sécurité (SE) selon la revendication 1 ou 2, **caractérisé en ce que** la mémoire de données (M) peut être gérée au moyen d'une unité Memory Management, MMU.

4. Module de sécurité (SE) selon une des revendications précédentes, **caractérisé en ce que** la mémoire de données (M) est sécurisée au moins partiellement par cryptage d'adresse et/ ou de données.

5. Module de sécurité (SE) selon une des revendications précédentes, **caractérisé en ce que** l'opération de sécurité se trouve sous forme d'au moins une opération issue d'un groupe, le groupe comportant : une opération d'écriture d'un drapeau, une opération d'écriture d'une fonction de verrouillage de la mémoire de données (M), une opération d'écriture d'une information de manipulation, une opération d'effacement, un rejet du processus d'écriture et une annulation du processus d'écriture.

6. Module de sécurité (SE) selon une des revendications précédentes, **caractérisé en ce que** le module de sécurité (SE) tient à disposition une logique de décision qui décrit quelle opération de sécurité est à engendrer.

7. Module de sécurité (SE) selon une des revendications précédentes, **caractérisé en ce que** l'unité de traitement de manipulation (E2) est conçue pour engendrer l'opération de sécurité avant ou après une opération d'écriture.

8. Module de sécurité (SE) selon une des revendications précédentes, **caractérisé en ce que** la commande du module de sécurité (SE) a lieu au moyen d'un standard de la famille ISO 7816.

9. Module de sécurité (SE) selon une des revendications précédentes, **caractérisé en ce que** la mémoire de données (M) se trouve sous forme d'une mémoire non volatile.

10. Module de sécurité (SE) selon une des revendications précédentes, **caractérisé en ce qu'**au moins une unité d'écriture (S1, S2) se trouve sous forme d'une eUICC et/ou qu'au moins une unité d'écriture (S1, S2) se trouve sous forme d'un contrôleur bande de base, BB.

11. Module de sécurité (SE) selon une des revendications précédentes, **caractérisé en ce que** la reconnaissance de l'unité d'écriture (S1, S2) a lieu par l'unité de traitement de manipulation (E2) en utilisant une pompe de charge.

12. Module de sécurité (SE) selon une des revendications précédentes, **caractérisé en ce que** la mémoire de données (M) est agencée à l'intérieur d'une eUICC ou à l'extérieur d'une eUICC.

13. Procédé de gestion sécurisée de mémoire, comportant :
- mesure physique (100) d'une opération d'écriture sur une mémoire de données (M) en utilisant une pompe de charge ; et
- sélection (101) d'une opération de sécurité mise à disposition en fonction de la lecture, sur la base d'une logique mise à disposition, dans le cas où l'opération d'écriture est à affecter à une unité d'écriture (S1, S2) non autorisée.

14. Produit programme d'ordinateur ayant des instructions de commande pour effectuer le procédé selon la revendication 13.
